# EUROPÄISCHE PATENTANMELDUNG

(11) **EP 2 295 953 A1**
(43) Veröffentlichungstag der Anmeldung: **16.03.2011**
(21) Anmeldenummer: 10008777.4
(22) Anmeldetag: 24.08.2010
(51) Int. Cl.: G01N 21/64, G01N 21/85

(54) **Einrichtung zum Messen von Stoffkonzentrationen in Lösungen auf Basis einer Fluoreszenzmessung**

(30) Priorität: 12.09.2009 DE 202009012456 U
(71) Anmelder: SITA Messtechnik GmbH, 01217 Dresden (DE)
(72) Erfinder: Haberland, Ralf, 01257 Dresden (DE); Schümann, Daniel, 01099 Dresden (DE); Schulze, Lothar, 01139 Dresden (DE)
(74) Vertreter: Ilberg, Roland

(57) **Zusammenfassung**

Eine Einrichtung zum Messen von Stoffkonzentrationen in Lösungen auf Basis eines Fluoreszenzsensors ist gekennzeichnet durch eine baulich kompakte, autarke Messeinheit, umfassend ein Gehäuse (1) mit mindestens einem fest oder lösbar mit dem Gehäuse (1) verbundenen Fluoreszenzsensor (2) mit einem in die Probenflüssigkeit eintauchbaren Lichtleitelement, einer im Gehäuse (1) angeordneten Verarbeitungs- und Speicherelektronik (5) für eine Messsignalverarbeitung, für einen vorinstallierten Programmablauf und für Kalibrieralgorithmen sowie eine im Gehäuse (1) untergebrachte Stromversorgung (8).

## Beschreibung

### Anwendungsgebiet der Erfindung

Die Erfindung betrifft eine Einrichtung zum Messen von Stoffkonzentrationen in Lösungen auf Basis einer Fluoreszenzmessung. Bevorzugte Anwendung findet die Erfindung bei der Kontrolle von Prozesslösungen der wässrigen Reinigung. Solche Prozesslösungen bestehen beispielsweise aus in Wasser gelösten Tensiden und einer Schmutzfracht, beispielsweise Öl. Weitere Anwendungen sind bei durch Gebrauch belasteten Lösemitteln gegeben. Auch in Lösungen mit einem gewünschten Anteil an fluoreszierenden Bestandteilen kann die Konzentration fluoreszierender Inhaltsstoffe erfasst werden.

### Stand der Technik

Ein übliches Verfahren zum Bestimmen von Stoffkonzentrationen in Lösungen ist die Messung der Intensität und/oder der spektralen Verteilung einer optischen Strahlung, die eine Lösung passiert hat. Im einfachsten Fall kann beispielsweise mit Durchlichtverfahren die Trübung einer Lösung erfasst werden.

Stoffgruppenspezifischer kann das Auswerten einer Fluoreszenzstrahlung sein, die z.B. durch Einstrahlen einer Anregungsstrahlung in die Flüssigkeit erzeugt wird. Da die erfassbare Intensität der Fluoreszenz neben der Wellenlänge sowohl von der Verteilung/ Dichte der anregenden als auch der emittierten Strahlung abhängt, werden üblicherweise Messgefäße definierter Geometrie und definierten optischen Eigenschaften, z.B. Küvetten, verwendet, mit Durchlässen für die optische Strahlung.

Für eine online-Messung werden entsprechend ausgebildete Durchflussmesszellen eingesetzt.

In der US-Patentschrift 5,381,002 wird eine Methode zum Messen von Ölkonzentrationen angegeben, bei der ein dispergiertes Öl- Wassergemisch durch eine Messzelle strömt und die Ölkonzentration an Hand der Intensität der Fluoreszenzstrahlung mit einem Fluoreszenzdetektor gemessen wird, die durch relativ breitbandige Strahlungsquellen angeregt wird.

In der DE 198 18 192 A1 werden eine Vorrichtung und ein Verfahren zum Bestimmen einer Ölkonzentration in Flüssigkeiten angegeben, bei der ein Öl- Wassergemisch durch eine Messzelle strömt und die Ölkonzentration an Hand der Intensität der Fluoreszenzstrahlung mit einem Fluoreszenzdetektor gemessen wird, die durch eine schmalbandige Excimerlampe als Strahlungsquelle angeregt wird.

Die DE 10 2005 001 850 A1 gibt eine Messeinrichtung zum Messen einer Größe einer Flüssigkeit an, welche einen Messraum mit mindestens einem Messfenster für elektromagnetische Wellen aufweist. Optional kann zur Kalibrierung ein Referenzstandard in einer bestimmten geometrischen Anordnung in den Strahlengang eingeschleift werden.

DE 43 27 752 A1 beschreibt ein tragbares Strahlungsmessgerät zur Lumineszenz- und Fluoreszenzmessung mit monochromatischer Lichtquelle, Detektoreinrichtung und controllergesteuertem Messablauf in tragbarer Ausführung mit einer Messkopfaufnahme für unterschiedliche Messköpfe, z.B. für Fluoreszenzmessungen.

Um den Messkopf von der Anregungslichtquelle abzusetzen, verwendet ein faseroptischer Sensor nach EP 0 450 305 A1 eine Lichtleitfaser, die in einem Messkopf mündet, der wiederum eine Optik enthält, die einen Fokus im zu untersuchenden Medium ausbildet. Dabei bleibt die Optik außerhalb der zu messenden Lösung.

DE 10 2007 016 830 A1 umfasst eine Reinigungsvorrichtung mit einer Analysevorrichtung für das Reinigungsmedium, bei der zusätzlich zu einer Messvorrichtung zur Erfassung von Messwerten für die Bildauswertung und die Auswertung von Farben- und/ oder Helligkeitsverteilungen wenigstens eine Sensoreinheit zur Messung eines Ölwertes des Reinigungsmediums enthalten ist. Dabei wird ein Reinigungsmedium führendes, optisch durchlässiges Rohr z.B. mit UV-Licht durchleuchtet.

Aus der DE 10 2008 011 013 A1 ist eine Einrichtung zur komplexen Stoffwechselanalyse für Mensch und Tier bzw. Pflanzen unter Verwendung einer Messzelle bekannt, deren Gehäuse eine Lichtquelle, ein Lichtleitkabel zur Ableitung für Anregungslicht und Fluoreszenzsignal, eine auf die Oberfläche des Messlings aufsetzbare Messsonde, einen optischen Filter und ein Miniaturspektrometer aufnimmt. Die Messzelle ist an ein Netzteil sowie an einen handelsüblichen Computer angeschlossen, in welchem eine kombinierte Mess- und Auswertesoftware für die Erfassung, Auswertung, Interpretation und Visualisierung der Messergebnisse installiert ist.

Aus der US 2004/01 75 837 A1 ist eine optische Analyseneinrichtung für trockene und feuchte Gase, für Kondensate oder für in Flüssigkeiten gelöste Moleküle mit einem Sensor, einer Steuer- und Auswerteelektronik und einer Anzeige in einem kleinen, flachen Gehäuse bekannt. Ein von einem beispielsweise flüssigen Reagenz durchströmtes dünnes Innenrohr besitzt eine durchlässige Membran für ein durch ein Außenrohr strömendes gasförmiges Agens. Im Innenrohr mischen sich Reagenz und Agens. Zwei Lichtquellen für in zwei Wellenlängen emittiertes Licht sind an einem Ende des Innenrohrs und ein Lichtdetektor am anderen Ende des Innenrohrs detektiert im Fluid die mikroskopisch kleinen Schwebeteilchens des Interesses. Ein weiterer Sensor misst den Fluiddurchfluss durch das Innenrohr. Eine bevorzugte Anwendung ist ein Mikrofluss-Cytometer für die Blutanalyse unter Ausgabe der O₃- und/oder NO₂-Werte.

### Technisches Problem

Die bekannten Messvorrichtungen zur Konzentrationsmessung von fluoreszierenden Bestandteilen in Lösungen sind nicht geeignet, mobil und insbesondere zur Messung einer bestimmten Zone einer Probenflüssigkeit eingesetzt zu werden.

Messzellen in Gestalt von Flüssigkeiten führenden Hohlkörpern müssen mit mindestens einem optischen Fenster versehen sein, um Strahlung ein- und auszukoppeln. Die Messzellen müssen mit Anschlüssen für das Fluid versehen sein.

Nachteilig ist, dass die Messzellen in irgendeiner Art und Weise befüllt werden müssen, d.h. dass das zu messende Medium dem ursprünglichen Behältnis entnommen werden muss. Wird in Prozessbehältern selbst gemessen, müssen diese selbst mit optischen Fenstern ausgerüstet sein, an denen entsprechende Messtechnik adaptiert wird.

Damit ist ein flexibler Einsatz einer Messeinrichtung sowohl zur inline- als auch offline-Messung erschwert.

Obwohl die Fluoreszenzmessung stark von der Temperaturmessung am Ort der Messung abhängt, finden sich im Stand der Technik keine Messvorrichtungen, welche die Temperatur der Probe am Ort der Fluoreszenzmessung erfassen.

### Aufgabe der Erfindung

Der Erfindung liegt die technische Aufgabe zu Grunde, eine kompakte, autark arbeitende, einfach zu handhabende Messeinrichtung auf Basis einer Fluoreszenzmessung zu schaffen, die flexibel für das direkte Messen der Stoffkonzentrationen in Lösungen mobil oder als feste Komponente einer industriellen prozesslösungstechnischen Anlage eingesetzt werden kann. Dabei soll die Messeinrichtung besonders zuverlässig und wartungsarm sein sowie dazu geeignet, auch unterschiedliche Lösungen auszumessen. Bei der Messung soll der Wirkraum der Anregungsstrahlung nicht den Bereich des aufschwimmenden Öls erfassen, d.h. in einer beliebigen Tiefe der Probe positioniert werden können.

### Offenbarung der Erfindung

Die Aufgabe wird erfindungsgemäß durch die Merkmale des Anspruchs 1 gelöst. Vorteilhafte Ausgestaltungen und Ausprägungen geben die begleitenden Unteransprüche an.

Erfindungsgemäß wird danach eine baulich kompakte, autarke Messeinrichtung geschaffen, welche einen Lichtwellenleiter aufweist, dessen Ende in die zu messende Flüssigkeit getaucht wird. Das Ende des Lichtwellenleiters bildet ein optisches Fenster, über welches sowohl die Anregungsstrahlung eingekoppelt als auch die Fluoreszenzstrahlung ausgekoppelt wird. Die Reichweite der Anregungsstrahlung ist gegenüber dem optischen Fenster durch eine nichtfluoreszierende Fläche begrenzt, so dass der Wirkraum der Anregungsstrahlung begrenzt ist. Damit ist die Messeinrichtung wesentlich unempfindlicher gegenüber dem Einfluss von z.B. Partikeln auf das Messergebnis. Über die Eintauchtiefe des Wirkraumes der Anregungsstrahlung ist die Zone der zu messenden Flüssigkeit flexibel vorgebbar, die Vorrichtung ist dabei nicht an eine Messzelle oder ein entsprechend hergerichtetes Rohrstück gebunden. Für eine hohe Reproduzierbarkeit soll die Temperatur nah am Ort des Wirkraums der Anregungsstrahlung gemessen werden.

Mit der erfindungsgemäßen Messeinrichtung lässt sich die Konzentration von in Lösungsmitteln gelösten fluoreszierenden Prozesschemikalien direkt messen, d.h. als Konzentrationswert ausgeben. Die Messeinrichtung enthält in ihrem Gehäuse eine Elektronik zur Ansteuerung mindestens eines Fluoreszenzsensors, zum Programmablauf, wie Kalibrierung und Messung, zur Auswertung der Fluoreszenz-Sensorsignale, zur Speicherung und zur Ausgabe der Messwerte nebst der erforderlichen Stromversorgung.

Für eine Kommunikation mit einem übergeordneten Leitsystem oder mit einem PC sind eine oder mehrere Schnittstellen vorhanden, die eine Steuerung der Messeinrichtung und das Übertragen von Messwerten ermöglichen. Beispiele hierfür sind USB, RS232, RS484, Ethernet, Profibus usw.. Auch die direkte Ansteuerung von Lösungsbehandlungseinrichtungen, Temperiereinrichtungen oder Lichtsignalanzeigen ist möglich.

Um aus den Fluoreszenzsensorsignalen Messwerte zu berechnen, nutzt die Messeinrichtung einen in die Sensorköpfe integrierten Speicher, der die applikationsspezifischen Fluoreszenz-Konzentrations-Kennlinien enthält. Dabei ist der Speicherinhalt variabel, d.h. die Kennlinien sind jederzeit modifizierbar. So ist die ebenso die Umrechnung in einen dimensionslosen Verschmutzungsgrad möglich.

Die Messeinrichtung ist mit mindestens einem Sensorkopf versehen, der jeweils mindestens einen Fluoreszenzsensor enthält. Der Sensorkopf kann fest an der Messeinrichtung installiert, lösbar in Form beispielsweise einer Steck- oder Schraubverbindung sowie optional jeweils mit einer Zuleitung ausgeführt sein. Die lösbare Ausführung erlaubt einen einfachen Austausch des Sensorkopfes.

Jeder dieser Fluoreszenzsensoren ist mit einer Fluoreszenz anregenden Lichtquelle, die sichtbares oder UV-Licht aussendet, und einer Detektoreinrichtung für die Erfassung der Fluoreszenzstrahlung versehen.

Die Anregungsstrahlung und die zurückkommende Fluoreszenzstrahlung werden mit einem Lichtleitelement bis zur bzw. von der Probe geführt. Das Lichtleitelement kann eine flexible lichtleitende Faser, ein lichtleitendes Faserbündel oder ein lichtleitender starrer Stab sein. Ein starrer Stab ist einfach zu einer Führung oder Hülle abzudichten. Das Ende des Lichtleitelementes bildet ein optisches Fenster und ist für das Eintauchen in die zu messende Probenflüssigkeit bestimmt.

Um den Bereich des Wirkens der Anregungsstrahlung zu begrenzen, ist eine nichtfluoreszierende Begrenzung angeordnet, z.B. in Form einer Kappe, die mit Öffnungen zum freien Durchtritt der Probenflüssigkeit versehen ist. Die Kappe lässt sich bei Bedarf durch einen Kalibrierstandard ersetzen, der eine definierte Fluoreszenz bereitstellt.

Vorteilhaft ist eine Umhüllung des Lichtleitelementes, die optischen und mechanischen Schutz bietet sowie den Temperaturfühler und die Begrenzung für den Wirkraum der Anregungsstrahlung trägt. Ist das Lichtleitelement totalreflektierend ausgerüstet, beispielsweise verspiegelt, ist eine vollständige Umhüllung nicht unbedingt erforderlich.

Im Weiteren besteht ein Fluoreszenzsensor aus einer Elektronik zur Ansteuerung der Lichtquelle(n) und zur Aufbereitung der Messsignale. Optional kann ein Speicher zur Ablage von sensorspezifischen Daten enthalten sein. Durch den in den Sensorkopf integrierten Speicher ist der Sensorkopf einfach wechselbar. Durch weitere hierin gespeicherte optische u.a. Parameter ist auch eine automatische Erkennung des Fluoreszenzsensortyps oder der Fluoreszenzsensornummer durch das Messgerät möglich, womit eine spezifische Verarbeitung der Fluoreszenzsensorsignale durch die Messeinrichtung erfolgen kann. Die Kennung kann auch mechanisch, elektrisch oder elektronisch realisiert werden. Ist nur ein Sensor für die Verwendung mit einem Hauptgerät vorgesehen oder ist der Sensor fest an der Messeinrichtung installiert, kann der Speicher sich auch im Hauptgerät befinden.

Weiterhin ist ein Temperaturfühler integriert, und zwar so, dass er die Temperatur möglichst nah am Ort des Auftretens der Fluoreszenzstrahlung erfasst.

Die Messeinrichtung hat typischerweise ein industriegeeignetes Design, gekennzeichnet durch ein robustes Gehäuse und einen hohen IP-Schutzgrad sowie entsprechende optionale Befestigungselemente wie Laschen oder (Gewinde-)Bohrungen.

Für die flexible Nutzung der Messeinrichtung ist ein Design in Form eines Handmessgerätes mit Bedienungselementen und einem Display als Nutzerschnittstellen vorteilhaft.

Die Begrenzung des Wirkraumes der Anregungsstrahlung ist eine Art Käfig mit geschlossener Bodenplatte, der von den Seiten her leicht durchströmt werden kann. Die Begrenzung besitzt mindestens eine feste Verbindung zum Lichtleitelement bzw. zum Sensorkopf.

### Ausführungsbeispiel

Die Erfindung soll an Hand eines Ausführungsbeispiels näher erläutert werden. In den zugehörigen Zeichnungen zeigen:
- **Fig. 1**: ein Prinzipbild einer erfindungsgemäßen Messeinrichtung,
- **Fig. 2**: ein Handmessgerät,
- **Fig. 3**: einen Sensorkopf,
- **Fig. 4**: ein Blockschaltbild zur Elektronik und
- **Fig. 5**: eine Fluoreszenz-Konzentrations-Kennlinie für ein mit verschiedenen Ölkon- zentrationen belastetes Reinigungsbad.

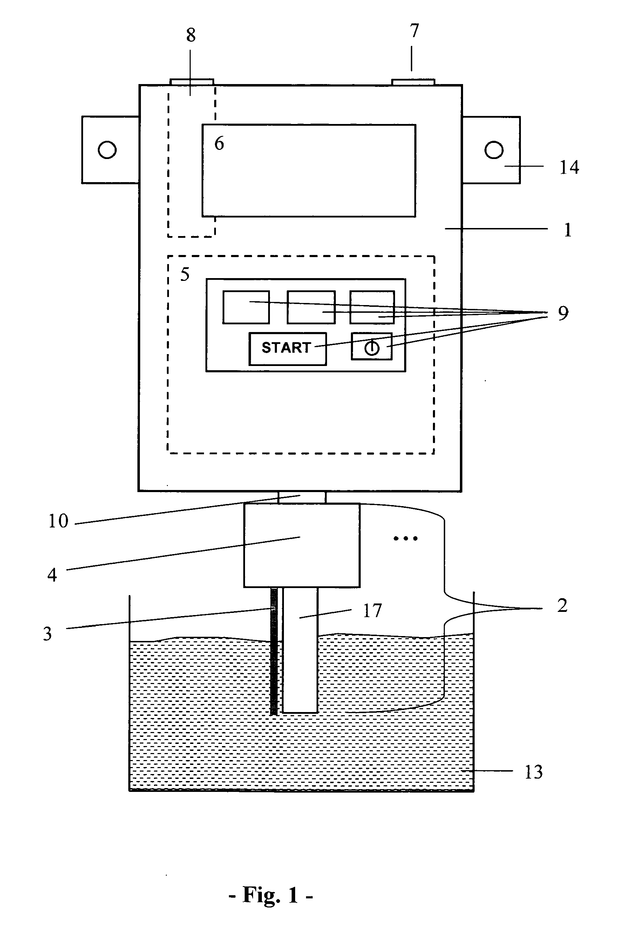

Der in **Fig. 1** dargestellte prinzipielle Aufbau einer Messeinrichtung zeigt ein Gehäuse 1, an welchem ein Fluoreszenzsensor 2 fest oder lösbar angeschlossen ist. Der Anschluss weiterer Fluoreszenzsensoren ist optional. Weiterhin ist ein stabförmiger Temperaturfühler 3 an das Gehäuse 4 des Fluoreszenzsensors 2 angeschlossen. Der Anschluss sonstiger Messgrößenaufnehmer an den Fluoreszenzsensor ist optional.

Innerhalb des Gehäuses 1 ist eine Verarbeitungs- und Speicherelektronik 5 für eine programmgesteuerte Messsignalverarbeitung sowie ein Display 6 für eine direkte Messwertausgabe der zu messenden und ggf. zu pflegenden Konzentration einer Lösung in % (Vol- oder Masse-%), ml/l oder in einem dimensionslosen Verschmutzungsgrad untergebracht. In einem Programmspeicher der Verarbeitungs- und Speicherelektronik 5 sind Verarbeitungsalgorithmen implementiert. Ferner können in einem Datenspeicher der Verarbeitungs- und Speicherelektronik 5 die Messdaten sowie die Messung oder die Messeinrichtung betreffende Parameter gespeichert werden. Mit den Messdaten des Temperaturfühlers 3 kann die Verarbeitungs- und Speicherelektronik 5 die Messdaten des Fluoreszenzsensors 2 oder der Fluoreszenzsensoren auf eine Bezugstemperatur kompensieren, bevor sie über eine Kommunikationsschnittstelle wie das Display 6 oder die Schnittstelle 7 ausgegeben oder im Datenspeicher der Verarbeitungs- und Speicherelektronik 5 gespeichert werden.

Die Messeinrichtung wird ferner von einer Stromversorgung 8 gespeist. Die Stromversorgung 8 kann an eine externe Stromzufuhr angeschlossen sein oder aus einem integrierten Energiespeicher gespeist werden, welcher eine Batterie oder ein wiederaufladbarer Akkumulator sein kann. Die Messeinrichtung enthält weiterhin eine Schnittstelle 7 zu einem PC oder einer SPS und hier nicht näher spezifizierte Bedienelemente 9. Die Schnittstelle 7 kann als USB, RS232, RS484, Ethernet, Profibus usw. ausgeführt sein.

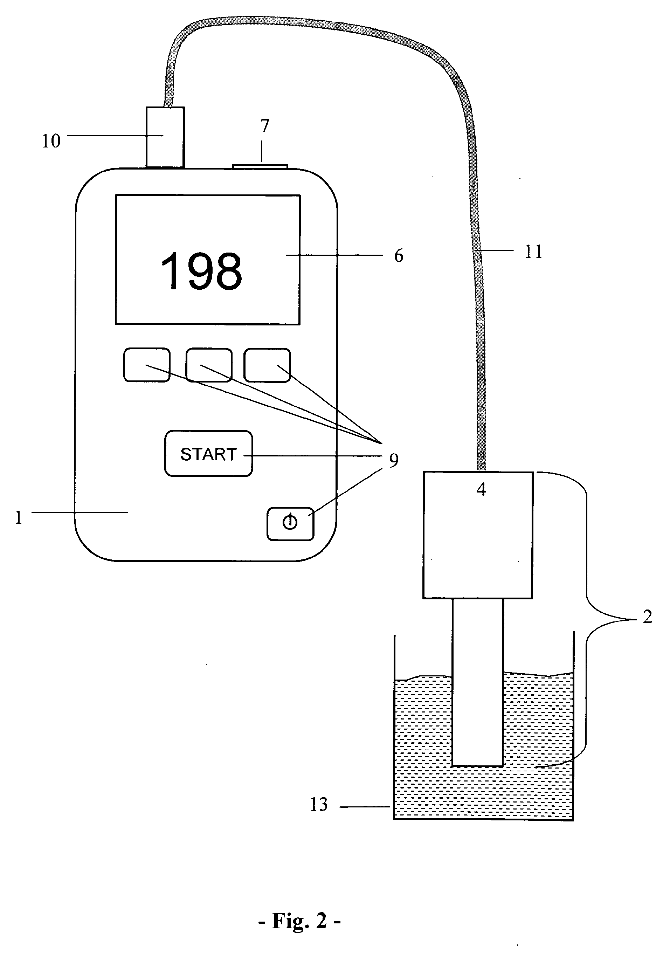

Der Fluoreszenzsensor 2 besitzt eine feste oder lösbare mechanische und elektrische Verbindung 10 zum Gehäuse 1 der Messeinrichtung. Die Schraub-, Steck-, Schnapp- oder Bajonettverbindung 10 zwischen dem Gehäuse 1 der Messeinrichtung und dem Fluoreszenzsensor 2 ist entweder direkt und damit starr oder flexibel mittels einer entsprechenden Zuleitung 11 **(****Fig. 2****)** zum Gehäuse 1. Rein schematisch ist in **Fig. 1** dargestellt, dass mit dem Gehäuse 1 in einer Variante der Messeinrichtung mehrere Fluoreszenzsensoren 2 verbunden werden oder sein können, insbesondere Fluoreszenzsensoren 2, die durch unterschiedliche Wellenlängenempfindlichkeit für die Messung einer vorbestimmten Lösungskomponente in einer Lösung ertüchtigt wurden. Dabei verarbeitet die Verarbeitungs- und Speicherelektronik 5 mit einem prozesslösungsspezifischen Modell die Messdaten verschiedener Fluoreszenzsensoren 2 derart kombiniert, dass auch in Mehrkomponentenlösungen oder Rezepturen die Konzentration der einzelnen Lösungsbestandteile eindeutig ermittelt werden kann. Die dazu erforderlichen prozesslösungsspezifischen Modelle können in einem Speicher der Verarbeitungs- und Speicherelektronik 5 oder im Speicher der Fluoreszenzsensoren 2 hinterlegt werden.

Die Verbindungen 10 zwischen dem Gehäuse 1 und lösbaren Fluoreszenzsensoren 2 sind so hergerichtet, dass mechanisch, elektrisch oder elektronisch automatisch von der Messeinrichtung erkannt wird, was für ein Fluoreszenzsensor 2 an das Gehäuse 1 angeschlossen ist. Entsprechend verarbeitet die Verarbeitungs- und Speicherelektronik 5 die vom Fluoreszenzsensor 2 eingehenden Messsignale. Die Verarbeitungs- und Speicherelektronik 5 ist auch in der Lage, Betriebsparameter der Fluoreszenzsensoren 2 zu überwachen und bei Abweichungen von vorgegebenen Sollparametern eine Information über das Display 6 oder die Schnittstelle 7 auszugeben. Die Messeinrichtung arbeitet dadurch besonders zuverlässig.

Das Gehäuse 1 der Messeinrichtung kann in der Hand gehalten oder mittels einem oder mehreren optionalen Befestigungselementen 14 fest installiert werden.

Die Messeinrichtung kann beispielsweise im Online- oder Offline-Betrieb ein industrielles Prozessbad überwachen, wobei der Fluoreszenzsensor 2 teilweise in die in Gefäß 13 enthaltene Prozesslösung eingetaucht wird. Alternativ kann ein Fluoreszenzsensor 2 durch eine Öffnung einer Wandung eines Prozessbehälters gerichtet montiert sein.

**Fig. 2** zeigt eine Ausführung der Messeinrichtung als Handmessgerät, z. B. für einen Laboreinsatz. Funktionsgleiche Bauteile sind mit zu **Fig. 1** identischen Bezugszeichen versehen. Der Fluoreszenzsensor 2 ist so kompakt, dass er mit einer Hand zu halten ist. Alternativ kann eine Stativhalterung verwendet werden.

Zur Bedienung sind Bedienelemente 9 vorgesehen, im Beispiel Drucktasten. Mit ihnen wird die Messeinrichtung EIN und AUS geschaltet, es lassen sich Einstellungen für Mess- und Kalibriermodi vornehmen, der Datenspeicher der internen Verarbeitungs- und Speicherelektronik 5 **(****Fig. 1**) verwalten sowie allgemeine Geräteeinstellungen wie die des Displaykontrastes u. ä. vornehmen.

Zwecks Messung einer in dem Gefäß 13 befindlichen Prozesslösung wird der über die Zuleitung 11 an das Gehäuse 1 angeschlossene Fluoreszenzsensor 2 mit dem integrierten, hier nicht näher dargestellten Temperaturfühler 3 und dem integrierten, hier nicht näher dargestellten Lichtleitelement bei eingeschalteter Messeinrichtung zumindest teilweise in die Prozesslösung getaucht. Die Messvorrichtung "weiß" aufgrund der Kennung des angeschlossenen Fluoreszenzsensortyps, was gemessen werden soll und gibt - wie in Fig. 2 dargestellt - einen Verschmutzungsgrad auf dem Display 6 direkt als Wert aus. Alternativ kann ein Konzentrationswert ausgegeben werden. Erforderlichenfalls kann der Fluoreszenzsensor 2 im Anschluss teilweise in ein Wasser- oder Lösemittelbad getaucht und kurz gespült werden, worauf er sofort wieder verwendet werden kann. Dazu kann ein Reinigungsmodus z.B. vorgeben, den Fluoreszenzsensor 2 in eine Spülflüssigkeit zu tauchen, eine bestimmte Zeit abzuwarten oder eine Drift zu ermitteln und anschließend das Reinigungsergebnis ausgeben. Der Fluoreszenzsensor 2 kann aber auch ungespült andere Konzentrationen derselben Lösung messen.

Der Fluoreszenzsensor 2 lässt er sich bei Bedarf gegen einen neuen Fluoreszenzsensor 2 leicht auswechseln, zum Beispiel, wenn die Konzentration einer Lösung mit anderen Bestandteilen gemessen werden soll.

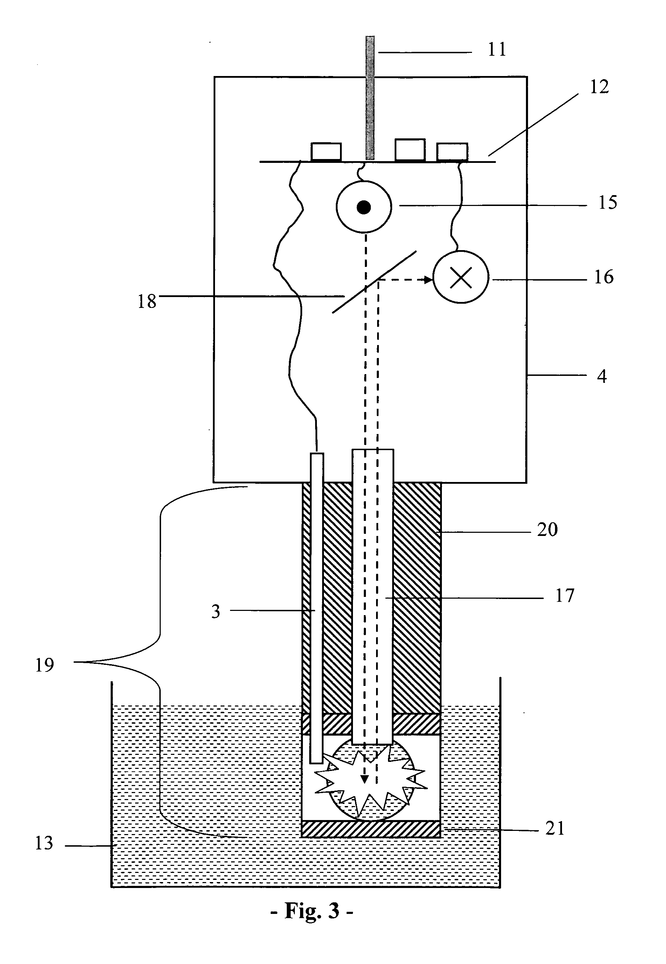

**In** **Fig. 3** ist ein einzelner Fluoreszenzsensor 2 schematisch und beispielhaft dargestellt. Er enthält in seinem Gehäuse 4 eine Quelle für Anregungsstrahlung 15 und eine Detektoreinheit für Fluoreszenzstrahlung 16, z.B. in der Form von Halbleiterbauelementen. Beide Strahlungen werden im Lichtleitelement 17 bis zur bzw. von der zu messenden Probe geführt. Zur Separation der Strahlungen dient eine strahlungsbeeinflussende Optik 18, die aus einer hier schematisch dargestellten teildurchlässigen Spiegel-Filter-Kombination besteht. Die strahlungsbeeinflussende Optik 18 lässt vorzugsweise nur die interessierenden Wellenlängen passieren.

In die zu messende Probe wird mindestens ein Teil der am Gehäuse 4 des Fluoreszenzsensors 2 angebrachten Sonde 19 getaucht. Die Sonde 19 besteht aus einem Halter 20 und der Begrenzung des Wirkraumes der Anregungsstrahlung 21. Die Sonde 19 enthält weiterhin das Lichtleitelement 17 und den Temperaturfühler 3 nebst erforderlichen Abdichtungen.

Die Begrenzung des Wirkraumes der Anregungsstrahlung 21 ist demontierbar, was die Reinigung der eintauchbaren Teile erleichtert und bei Bedarf die Montage eines Kalibrierstandards ermöglicht, der eine definierte oder auch keine Fluoreszenz aufweist. Der Kalibrierstandard, z.B. in Gestalt eines Feststoffstandards, kann auch einfach in die undemontierte Begrenzung des Wirkraumes der Anregungsstrahlung 21 eingesetzt werden.

Alternativ können der Halter 20 und die Begrenzung des Wirkraumes der Anregungsstrahlung 21 ein Bauteil bilden.

Auf der Leiterplatte 12 des Fluoreszenzsensors 2 sind neben den Anschlüssen für den Temperaturfühler 3, die Quelle für Anregungsstrahlung 15 und die Detektoreinheit für Fluoreszenzstrahlung 16 sowie ein nicht näher bezeichneter Speicher angeordnet, der die Fluoreszenz-Konzentrations-Kennlinien und allgemeine Sensordaten wie Sensornummer, Einsatzdauer o.ä. enthält. Von der Leiterplatte 12 führt eine flexible elektrische Zuleitung 11 zu der hier nicht dargestellten Verbindung 10, mit der der Sensorkopf 2 an das Gehäuse 1 anschließt. Über die elektrische Zuleitung 11 kann der Fluoreszenzsensor 2 auch direkt an eine Steuerung wie eine SPS angeschlossen werden, die sich schon z.B. an einer Reinigungsanlage befindet.

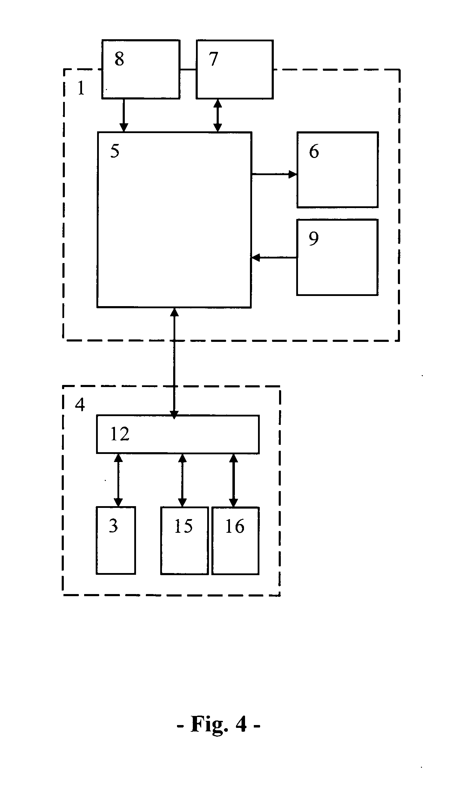

**Fig. 4** zeigt ein Blockschaltbild der Messeinrichtung, die aus den Teilen Gehäuse 1 und Gehäuse des Fluoreszenzsensors 2 besteht. Die Verarbeitungs- und Speicherelektronik 5 sorgt für eine programmgesteuerte Messsignalverarbeitung, für die Ansteuerung und Auswertung des Fluoreszenzsensors 2, für die direkte Ausgabe von Messwerten der zu messenden und ggf. zu pflegenden Konzentration einer Lösung in % (Volumen- oder Masse-%) oder in einem dimensionslosen Verschmutzungsgrad und sonstiger Ausgaben über das Display 6. Im Programmspeicher der Verarbeitungs- und Speicherelektronik 5 sind dazu die erforderlichen Ablauf- und Verarbeitungsalgorithmen implementiert. Die Messeinrichtung wird ferner von der Stromversorgung 8 gespeist und kommuniziert über die Schnittstelle 7 zu einem PC oder einer SPS und wird über die hier nicht näher spezifizierten Bedienungselemente 9 bedient. Die Schnittstelle 7 kann als USB, RS232, RS484, Ethernet, Profibus usw. ausgeführt sein.

Auf der Leiterplatte 12 sind ein Temperaturfühler 3, die Quelle für Anregungsstrahlung 15 und die Detektoreinheit für Fluoreszenzstrahlung 16 sowie der nicht näher bezeichnete Speicher angeordnet, aus dem die Verarbeitungs- und Speicherelektronik 5 die Schwingfrequenz-Konzentrations-Kennlinien und allgemeine Sensordaten wie Sensornummer, Einsatzdauer o.ä. ausliest und ggf. ändert.

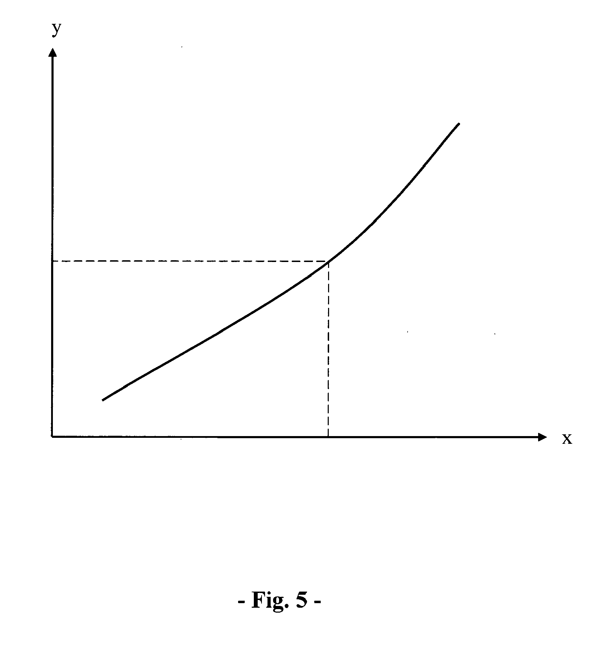

Schließlich ist beispielhaft in **Fig. 5** eine typische Fluoreszenz-Konzentrations-Kennlinie für eine variable Ölbelastung einer Reinigerlösung dargestellt. Mit zunehmender Ölkonzentration steigt die Intensität der Fluoreszenzstrahlung. Auf der·x-Achse ist der Verschmutzungsgrad oder alternativ die Konzentration in % ablesbar, auf der y-Achse die entsprechende Intensität der Fluoreszenzstrahlung.

Die Kalibrierung der Sensoren erfolgt beispielsweise durch Ermitteln von wenigstens zwei Stützstellen der Fluoreszenz -Konzentrations-Kennlinien. Dies kann auch der Programmablauf der Messeinrichtung bewerkstelligen. Z.B. kann die Messeinrichtung einen Algorithmus vorgeben, nach dem eine erforderliche Anzahl von Referenzproben angefordert wird, in die der Fluoreszenzsensor 2 zu tauchen ist. Mit diesen Stützstellen kann eine Fluoreszenz -Konzentrations-Kennlinie ermittelt werden und im Speicher der Leiterplatte 12 **(****Fig. 3****)** des Fluoreszenzsensors 2 abgelegt werden. Alternativ kann eine Einpunkt-Kalibrierung ausgeführt werden, z.B. auf eine vorgegebene maximale Ölkonzentration bzw. Verschmutzung. Auch kann ein Feststoffstandard verwendet werden, der eine äußerst stabile Fluoreszenz aufweist.

Zum Messen einer Konzentration einer wässrigen Lösung verknüpft die Verarbeitungs- und Speicherelektronik 5 **(****Fig. 1****)** die Signale aus dem Fluoreszenzsensor 2 **(****Fig. 3****)** mit den Fluoreszenz -Konzentrations-Kennlinien aus dem Speicher der Leiterplatte 12 **(****Fig. 3****)** zur Ausgabe der Konzentrationswerte in z.B. Prozent oder als dimensionslosen Verschmutzungsgrad auf dem Display 6 **(****Fig. 2****).**

### Bezugszeichen

- 1: Gehäuse
- 2: Fluoreszenzsensor
- 3: Temperaturfühler
- 4: Gehäuse des Fluoreszenzsensors
- 5: Verarbeitungs- und Speicherelektronik
- 6: Display
- 7: Schnittstelle zu einem PC oder einer SPS
- 8: Stromversorgung
- 9: Bedienelemente
- 10: Verbindung
- 11: Zuleitung
- 12: Leiterplatte
- 13: Gefäß mit Prozesslösung
- 14: Befestigungselement
- 15: Quelle für Anregungsstrahlung
- 16: Detektoreinheit für Fluoreszenzstrahlung
- 17: Lichtleitelement
- 18: strahlungsbeeinflussende Optik
- 19: Sonde
- 20: Halter
- 21: Begrenzung des Wirkraums der Anregungsstrahlung

## Patentansprüche

1. Einrichtung zum Messen von Stoffkonzentrationen in Lösungen auf Basis eines Fluoreszenzsensors,
**gekennzeichnet durch**
eine baulich kompakte, autarke Messeinrichtung, umfassend ein Gehäuse (1) mit mindestens einem fest oder lösbar mit dem Gehäuse (1) verbundenen Fluoreszenzsensor (2) mit einem in die Probenflüssigkeit eintauchbaren Lichtleitelement (17), eine im Gehäuse (1) angeordnete Verarbeitungs- und Speicherelektronik (5) für eine Messsignalverarbeitung, für einen vorinstallierten Programmablauf und für Kalibrieralgorithmen, sowie eine im Gehäuse (1) untergebrachte Stromversorgung (8).

2. Einrichtung nach Anspruch 1,
**dadurch gekennzeichnet,**
**dass** der mindestens eine Fluoreszenzsensor (2) fest an der Messeinrichtung installiert ist.

3. Einrichtung nach Anspruch 1,
**dadurch gekennzeichnet,**
**dass** der mindestens eine Fluoreszenzsensor (2) lösbar in Form einer Schraub-, Schnapp-, Steck- oder Bajonettverbindung (10) an der Messeinrichtung installiert ist.

4. Einrichtung nach Anspruch 1,
**dadurch gekennzeichnet,**
**dass** der mindestens eine Fluoreszenzsensor (2) über eine flexible Zuleitung (11) an der Messeinrichtung installiert ist.

5. Einrichtung nach Anspruch 1,
**dadurch gekennzeichnet,**
**dass** der mindestens eine Fluoreszenzsensor (2) im Gehäuse (1) der Messeinrichtung integriert ist.

6. Einrichtung nach Anspruch 1,
**dadurch gekennzeichnet,**
**dass** im Gehäuse (1) ein Display (6) zur direkten Messwertausgabe und Bedienelemente (9) angeordnet sind.

7. Einrichtung nach mindestens einem der vorstehenden Ansprüche,
**dadurch gekennzeichnet,**
**dass** der Wirkbereich des Lichtleitelementes (17) durch eine zum Lichtleitelement (17) fest positionierte nichtfluoreszierende Begrenzung (21) begrenzt ist.

8. Einrichtung nach mindestens einem der vorstehenden Ansprüche,
**dadurch gekennzeichnet,**
**dass** der Fluoreszenzsensor (2) eine mechanische, elektrische oder elektronische Anschlusskennung bezüglich seines Übertragungsverhaltens aufweist.

9. Einrichtung nach mindestens einem der vorstehenden Ansprüche,
**dadurch gekennzeichnet,**
**dass** im Fluoreszenzsensor (2) ein interner Speicher zur Ablage von Fluoreszenz-Konzentrations-Kennlinien und weiteren sensorspezifischen Parametern angeordnet ist.

10. Einrichtung nach mindestens einem der vorstehenden Ansprüche,
**dadurch gekennzeichnet,**
**dass** die Einrichtung mit einer oder mehreren Schnittstellen (7) zu einer SPS oder einem PC und optional einer externen weiteren Stromversorgung (8) ausgeführt ist.

11. Einrichtung nach mindestens einem der vorstehenden Ansprüche,
**dadurch gekennzeichnet,**
**dass** die Verarbeitungs- und Speicherelektronik (5) einen Datenspeicher für die Messwerte der Messeinrichtung enthält.

12. Einrichtung nach mindestens einem der vorstehenden Ansprüche,
**dadurch gekennzeichnet,**
**dass** ein am Gehäuse (1) oder im Fluoreszenzsensor (2) angeordneter Temperaturfühler (3) zum Messen der Temperatur von Prozesslösung vorhanden ist.

13. Einrichtung nach mindestens einem der vorstehenden Ansprüche,
**dadurch gekennzeichnet,**
**dass** die Verarbeitungs- und Speicherelektronik (5) auf eine Temperaturkompensation der Messdaten der Fluoreszenzsensoren (2) mit den Messdaten eines Temperaturfühlers (3) eingerichtet ist.

14. Einrichtung nach mindestens einem der vorstehenden Ansprüche,
**dadurch gekennzeichnet,**
**dass** die Einrichtung als baulich kompaktes, autarkes Prozessmessgerät ausgeführt ist.

15. Einrichtung nach mindestens einem der vorstehenden Ansprüche 1 - 13, **dadurch gekennzeichnet,**
**dass** die Einrichtung als baulich kompaktes, autarkes, mobiles Handmessgerät ausgeführt ist.

16. Einrichtung nach Anspruch 1,
**dadurch gekennzeichnet,**
**dass** die Vorrichtung einen Konzentrationswert oder einen dimensionslosen Verschmutzungsgrad ausgibt.
